# EUROPEAN PATENT SPECIFICATION

(11) **EP 0 769 613 B1**
(45) Date of publication and mention of the grant of the patent: **13.06.2001**
(21) Application number: 96116571.9
(22) Date of filing: 16.10.1996
(51) Int. Cl.: F02D 41/36, F02D 33/02, F02D 43/00, F02D 41/08

(54) **A system for controlling the fuel/air supply of a reciprocating internal combustion engine**
Regeleinrichtung zum Steuern der Kraftstoff-Luftzufuhr für eine Hubkolbenbrennkraftmaschine
Système de commande d'alimentation carburant/air pour moteur à piston à combustion interne

(30) Priority: 18.10.1995 IT TO950842
(43) Date of publication of application: 23.04.1997
(73) Proprietor: FIAT AUTO S.p.A., 10135 Torino (IT)
(72) Inventor: Perotto, Aldo, 10050 Meana di Susa, Torino (IT); Vattaneo, Francesco, 10060 Pancalieri, Torino (IT); Parisi, Filippo, 10137 Torino (IT)
(74) Representative: Quinterno, Giuseppe

(56) References cited:
- EP-A- 0 376 714
- EP-A- 0 433 632
- US-A- 5 146 888
- US-A- 5 377 654
- US-A- 5 408 966
- PATENT ABSTRACTS OF JAPAN vol. 17, no. 423 (M-1458), 6 March 1993 & JP-A-05 086914 (HONDA MOTOR CO LTD), 6 April 1993,

## Description

The present invention relates to a system for controlling the fuel/air supply of a reciprocating internal combustion engine in which the movement of at least one valve associated with each cylinder of the engine can be uncoupled from the rotation of the drive shaft.

In reciprocating internal combustion engines, the movement of the valves associated with the cylinders, especially their lift, is customarily controlled by the rotation of eccentric members keyed onto a cam shaft, the rotation of which is coupled to the rotation of the drive shaft. Reciprocating engines of a more developed type are, however, known in which there are associated with the valves timing control devices which enable the movement of the valves to be uncoupled from the rotation of the drive shaft in order to obtain greater versatility in the management of the engine performance. In particular, timing control devices are known which comprise chambers which are to be supplied with a fluid, for example oil for lubricating the engine, and each of which is interposed between a tappet member associated with a cam of the cam shaft, and a respective engine valve. By opening or closing a port of each of these chambers by means of a solenoid valve or other intercepting device known per se, it is possible to control, as desired, the coupling or uncoupling of each valve with the rotating motion of the drive shaft in order to obtain a desired regulation of the operation of the engine.

Regulating devices are also known which comprise electromagnetic actuators which are used directly to regulate the lift of the valves. In this case, the operation of electromagnets enables the law of lift to be regulated without having to use cam shafts.

The above-mentioned known systems normally include a device for measuring the volume of air taken in by the cylinders. The measured value of the air volume can be used to calculate the amount of fuel which has to be supplied to each cylinder in order to obtain optimum combustion of the mixture. The influx of air to the cylinders is regulated by means of a butterfly valve controlled by means of an accelerator device associated with the engine and operated by the driver, normally a pedal, which butterfly valve is arranged in a conduit upstream of the induction manifold of the engine cylinders. However, this butterfly valve has the disadvantage of permitting only imprecise regulation of the amount of air to be supplied to the cylinders because it can control only the delivery of intake air to the induction manifold, thus controlling only the average conditions of the intake environment of the various cylinders, while it does not permit specific control of the intake environment for each cylinder.

EP-A-433 632 discloses a system comprising sensor means which detect quantities indicating the number of revolutions of the engine and the operative position of an accelerator device associated with the engine, and electronic means preset to calculate and control both the amount of air and the amount of fuel to be supplied to each cylinder after the data detected by the sensor means have been processed. The electronic means also control, cycle by cycle, the movement of the at least one valve per cylinder as a function of quantities indicating the number of revolutions of the engine and the calculated amount of air to be supplied to the cylinder concerned.

In order to overcome the disadvantages of the known systems, the present invention relates to a system having the features set forth in appended claim 1.

Owing to these characteristics, the system according to the invention enables the operation of the engine to be optimised as regards performance, controllability, consumption and emissions. In addition, the air is regulated without having to measure it and it is therefore no longer necessary for the engine to be provided with a device for measuring the air volume.

Using these electronic means, it is thus possible to control directly the amount of air taken in by the engine and thus the charge delivered.

Owing to the system according to the invention, it is also possible to eliminate completely the butterfly valve upstream of the induction manifold. This advantageously enables ambient pressure to prevail at all times in the induction manifold. In addition, during transient conditions, the flow of intake air is not slowed down and consequently delayed by the presence of obstacles, previously constituted by the butterfly valve, and it is therefore possible to obtain a more rapid engine response.

The system according to the invention thus enables the air taken in for each cycle by each cylinder to be regulated individually, so that it is possible to regulate the fuel supplied to each cylinder both in terms of quantity and in terms of timing, and it is also possible to regulate the spark advance cycle by cycle and cylinder by cylinder. Thus, the air/petrol ratio is controlled at each cycle in such a manner that it is always maintained at the value corresponding to the maximum conversion efficiency of the catalytic silencer.

In addition, it is possible to obtain "modular" operation of the engine by blocking the supply of air and fuel to one or more cylinders when the power required at the engine can be delivered with a smaller number of cylinders which work under conditions of improved efficiency compared with when all of the cylinders are operating.

In addition, when the engine is idling, it is possible to act directly on the conditions of air intake for the various cylinders, thus avoiding control of the engine regime by means of the customary butterfly bypass conduit. Under these conditions, the system according to the invention permits the calculation of the amount of air which has to be added to the basic amount of air calculated for normal operation of the engine, in order to obtain the correct amount of air for introduction into each cylinder and for each cycle. It is thus possible to optimise the operation of the engine when idling since the air taken in by each cylinder for each cycle can be regulated precisely owing to the fact that, being controlled directly with the regulation of the lift of the engine valves, it is not subject to the inevitable delays that would occur when passing through the bypass conduit present in the usual systems.

Other characteristics and advantages of the invention will become clear from the following detailed description of a preferred embodiment thereof which is given purely by way of non-limiting example with reference to the appended drawings, in which:
Figure 1 is a diagrammatic view of an electronic unit associated with an internal combustion engine for controlling the fuel/air supply thereof; and
Figure 2 is a representative diagram showing the relationship of the position of an accelerator device associated with the engine and the number of revolutions of the engine with the volume of air required thereby, referred to as the "controllability map".

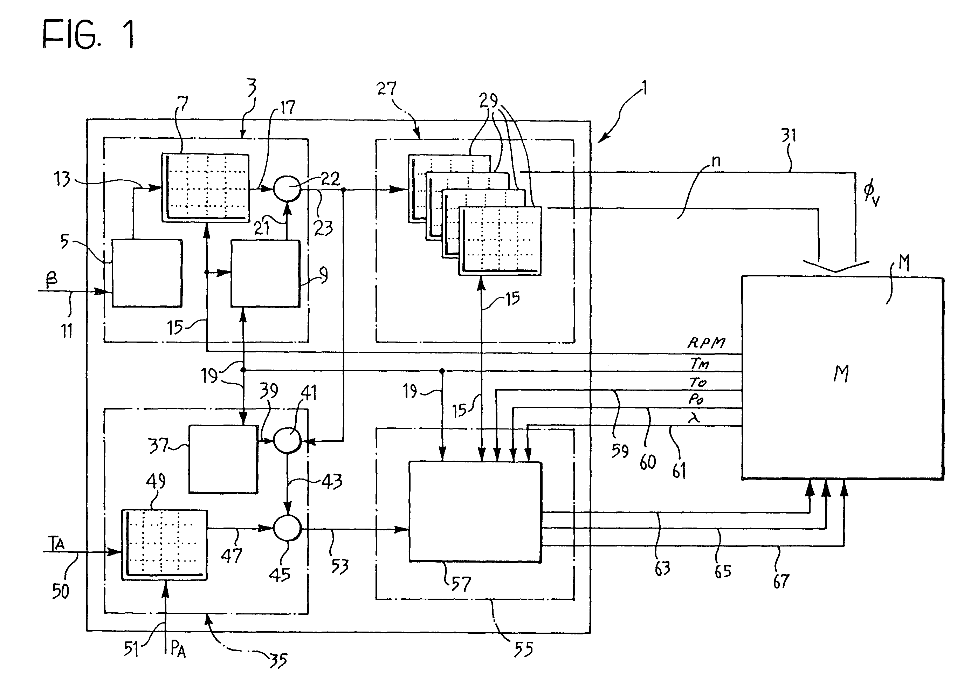

With reference to Figure 1, M denotes a reciprocating internal combustion engine comprising a device of a type known per se which can control the lift of the valves of the cylinders of the engine M, especially the intake valves, in such a manner as to uncouple the motion thereof with respect to the cams of the cam shaft and thus with respect to the rotation of the drive shaft.

Associated with the engine M is an electronic control unit 1 which regulates the lift of the valves as a function of various parameters, including data concerning the operating conditions of the engine M.

The electronic unit 1 comprises a first module 3 which is preset to receive data relating to the operating conditions of the engine M and to the request for power on the part of the driver of the vehicle, and to calculate a value for the volume of air to be supplied to the cylinders. The request for power on the part of the vehicle driver, which is indicated in the drawing by the reference numeral 11, is derived from the operative position of an accelerator device associated with the engine M, for example the angle β of inclination of the accelerator pedal. This request is then filtered in a block 5 which corrects any of the driver's requests that are too abrupt and that could have a detrimental effect on the controllability of the vehicle and on the emissions of the engine M, in such a manner that it arrives at a block 7 in the form of a corrected quantity 13.

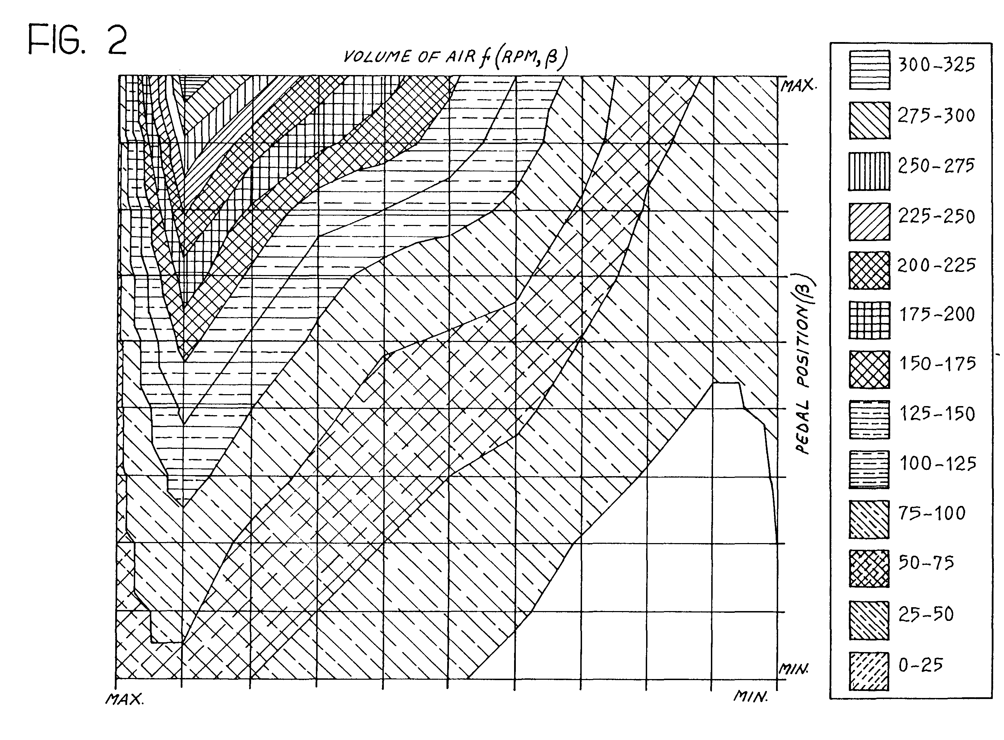

In the block 7, a calculation is made of the main air volume 17 to be supplied to the cylinders of the engine M, by means of data stored and organised in the form of a table known as a "controllability map" (an example of which is provided in Figure 2 purely by way of indication) which put in relation the quantity 13 and a signal 15 indicating the number of revolutions RPM of the engine with the volume of air 17 required by the engine in those operating conditions.

The module 3 also comprises a block 9 for calculating a corrective amount of air 21 which is to be added to the main amount of air 17 under conditions where the engine M is idling. The block 9 receives at its input the number of revolutions 15 of the engine and data 19 indicating the operating temperature T_{M} of the engine M, typically the temperature of the water in the cooling circuit.

In 22, the signals 17 and 21 leaving the blocks 7 and 9 are added together to produce a single signal 23 which indicates the total amount of air which has to be taken in by the engine M. This signal 23 is supplied to a module 27 which converts it into a number "n" of pulses Φ_{V} for controlling the movements of the valves of the engine M. To that end, the module 27 comprises data which are organised in the form of tables 29 and which, when the total volume of air 23 calculated and the number of revolutions 15 of the engine M are known, permit the generation of signals 31 for regulating the lift of the valves, which signals are sent to a timing control device of a type known per se which renders the lift of the valves independent of the rotation regime of the engine M. The signals 31 are correlated with the period of the motion of each piston of the engine M and this control is therefore effected cycle by cycle and cylinder by cylinder.

The signal 23 relating to the total air volume is also supplied to a module 35 which corrects the calculated air volume value and which also receives data 50 and 51 relating to the temperature T_{A} and to the pressure P_{A} of the ambient air. This module uses an ambient correction map 49 in order to obtain a value 47 for correcting the calculated air volume, for given ambient conditions. The module 35 also comprises a block 37 for correcting the calculated air volume as a function of the temperature T_{M} of the engine. This correction becomes necessary if the device effecting the lift of the valves is sensitive, and thus variable, in terms of operating precision, with the temperature of the engine.

The block 37 calculates a correction value 39 for multiplication in 41 with the value of the total air volume 23 calculated by the module 3, in order to obtain a correct value 43 which is sent to a block 45. The subsequent correction relating to the ambient conditions is carried out in the block 45 using the value 47.

At the output of the module 35, a final value is thus obtained for the correct air volume for the ambient conditions, and for the operation of the engine, which value is sent in the form of a signal 53 to a module 55 for calculating the fuel volume, its injection phase with respect to the engine phase, and the spark advance. The module 55 comprises a block 57 which can calculate, in a manner known per se and as a function of signals 15, 19 and 61, which relate respectively to the number of revolutions RPM and to the temperature T_{M} of the engine, and as a function of the operating parameters λ of one or more lambda probes installed in the exhaust, which are detected by an associated sensor, the duration 63 of fuel injection, the lead angle 65 of the commencement of injection and the lead angle 67 of the ignition of the spark plugs of the engine M.

The signals 59 and 60, which relate respectively to the temperature T₀ and to the pressure P₀ of the lubricating oil, may be necessary in the case where the device controlling the valve-lift law is operated by this fluid and the delivery of fuel and also the spark advance are sensitive to the physical state thereof.

## Claims

1. A system for controlling the fuel/air supply of a reciprocating internal combustion engine in which the movement of at least one valve associated with each cylinder of the engine (M) can be uncoupled from the rotation of the drive shaft, the system comprising sensor means which detect quantities indicating the number of revolutions of the engine (15) and the operative position (11) of an accelerator device associated with the engine (M), and electronic means (3, 35, 55) preset to calculate and control both the amount of air (23) and the amount of fuel (63) to be supplied to each cylinder after the data detected by the sensor means have been processed, these electronic means (1) also controlling, cycle by cycle, the movement of the at least one valve per cylinder as a function of quantities indicating the number of revolutions of the engine (15) and the calculated amount of air (23) to be supplied to the cylinder concerned, said sensor means also detecting data relating to a quantity (19) indicating the temperature of the engine (T_{M}), and the electronic means (1) being able to correct the amount of fuel to be supplied to each cylinder as a function of the detected value of the quantity (19) indicating the temperature of the engine (T_{M}) and as a function of measured values (50, 51) relating to the temperature (T_{A}) and to the pressure (P_{A}) of the atmospheric air,
characterised in that the sensor means are able to detect data relating to the pressure (Pₒ) and temperature (Tₒ) of the lubricating oil used for controlling the valve-lift and the electronic means (3, 5, 55) are preset to take into account such data concerning the physical state of the lubricating oil for calculating the delivery of fuel to the engine (M) and the spark advance.

2. A system according to Claim 1, characterised in that the electronic means (1) are preset to calculate an additional amount of air (21) relating to the state in which the engine (M) is idling, as a function of the detected value of the quantity (19) indicating the temperature of the engine (T_{M}).

3. A system according to any one of Claims 1 or 2, characterised in that the engine (M) is a multi-cylinder engine and the electronic means (1) are preset to determine instantaneously the efficiency of the engine and to control the movement of said at least one valve in order to cancel the supply of air and fuel to at least one of the cylinders if the power required at the engine can be delivered solely by the operation of, a number of cylinders which is smaller than the number of cylinders of the engine and with a total efficiency which is higher than that predetermined instantaneously.

## Patentansprüche

1. System, um die Kraftstoff/Luft-Zufuhr eines Verbrennungskolbenmotors zu steuern, bei dem die Bewegung von zumindest einem Ventil, das jedem Zylinder des Motors (M) zugeordnet ist, von der Drehung der Antriebswelle entkuppelt werden kann, wobei das System eine Fühlereinrichtung besitzt, mit der Werte abgetastet werden können, die die Drehzahl des Motors - (15) sowie die Betriebsstellung (11) einer Beschleunigungseinrichtung anzeigen, die dem Motor (M) zugeordnet ist, sowie eine Elektronikeinrichtung (3, 35, 55) besitzt, die voreingestellt ist, um sowohl die Luftmenge (23) als auch die Kraftstoffmenge (63), die jedem Zylinder zugeführt werden sollen, zu berechnen, nachdem die von der Fühlereinrichtung abgetasteten Daten verarbeitet wurden, wobei diese Elektronikeinheit (1) weiters Takt für Takt die Bewegung von dem zumindest einen Ventil pro Zylinder als Funktion von Werten steuert, die die Drehzahl des Motors (15) und die berechnete Luftmenge (23) angeben, die den betreffenden Zylindern zugeführt werden soll, wobei die Fühlereinrichtung weiters Daten abtastet, die sich auf einen Wert (19) beziehen,. der die Temperatur des Motors (T_{M}) angibt, und wobei die Elektronikeinheit (1) im Stande ist, die Kraftstoffmenge, die jedem Zylinder zugeführt werden soll, als Funktion des abgetasteten Größe für den Wert (19), der die Temperatur des Motors (T_{M}) angibt, sowie als Funktion von gemessenen Werten (50, 51) zu berechnen, die sich auf die Temperatur (T_{A}) und den Druck (P_{A}) der Außenluft beziehen,
dadurch gekennzeichnet, dass die Fühlereinrichtung im Stande ist, Daten abzutasten, die sich auf den Druck (Pₒ) und auf die Temperatur (Tₒ) des Schmieröls beziehen, das für die Steuerung der Ventilanhebung verwendet wird, und dass die Elektronikeinheit (3, 5, 55) voreingestellt wird, um jene Daten, die den physikalischen Zustand des Schmieröls betreffen, zu berücksichtigen, um die Zufuhr von Kraftstoff zum Motor (M) sowie die Vorzündung zu berechnen.

2. System gemäß Anspruch 1, dadurch gekennzeichnet, dass die Elektronikeinrichtung (1) voreingestellt wird, um eine Zusatzluftmenge (21), die sich auf jenen Zustand bezieht, in dem der Motor (M) im Leerlauf arbeitet, als Funktion der abgetasteten Größe für den Wert (19) zu berechnen, der die Temperatur des Motors (T_{M}) angibt.

3. System gemäß jedem der Ansprüche 1 oder 2, dadurch gekennzeichnet, dass der Motor (M) ein Mehrzylindermotor ist und dass die Elektronikeinrichtung (1) voreingestellt wird, um momentan den Wirkungsgrad des Motors festzustellen und die Bewegung des zumindest einen Ventils zu steuern, um die Zufuhr von Luft und Kraftstoff zu zumindest einem Zylinder zu unterbrechen, wenn die vom Motor geforderte Leistung nur durch den Betrieb von einer Anzahl von Zylindern, die kleiner als die Anzahl der Zylinder des Motors ist, und mit einem Gesamtwirkungsgrad bereitgestellt werden kann, der größer als der momentan vorgegebene ist.

## Revendications

1. Système de commande d'alimentation en carburant et en air d'un moteur à combustion interne de type alternatif dans lequel le mouvement d'au moins une soupape associée à chaque cylindre du moteur (M) peut être découplé de la rotation du vilebrequin, le système comprenant un dispositif capteur qui détecte des quantités représentatives du nombre de tours du moteur (15) et de la position de fonctionnement (11) du dispositif accélérateur associé au 'moteur (M), et un dispositif électronique (3, 35, 55) préréglé afin qu'il calcule et règle à la fois la quantité d'air (23) et la quantité de carburant (63) qui doivent être transmises à chaque cylindre après le traitement des données détectées par le dispositif capteur, le dispositif électronique (1) commandant aussi, cycle par cycle, le déplacement de l'au moins une soupape par cylindre en fonction des quantités représentatives du nombre de tours du moteur (15) et de la quantité d'air calculée (23) qui doit être fournie au cylindre concerné, le dispositif capteur détectant aussi des données relatives à une quantité (19) représentative de la température du moteur (T_{M}), et le dispositif électronique (1) pouvant corriger la quantité de carburant à transmettre à chaque cylindre en fonction de la valeur détectée de la quantité (19) représentative de la température du moteur (T_{M}) et en fonction des valeurs mesurées (50, 51) relatives à la température (T_{A}) et à la pression (P_{A}) dé l'air atmosphérique,
caractérisé en ce que le dispositif capteur est destiné à détecter des données relatives à la pression (P₀) et à la température (T₀) de l'huile lubrifiante utilisée pour la commande du soulèvement des soupapes, et le dispositif électronique (3, 5, 55) est préréglé afin qu'il prenne en compte des données concernant l'état physique de l'huile lubrifiante pour le calcul de la transmission du carburant au moteur (M) et de l'avance à l'allumage.

2. Système selon la revendication 1, caractérisé en ce que le dispositif électronique (1) est préréglé afin qu'il calcule une quantité supplémentaire d'air (21) relative à l'état dans lequel le moteur (M) est au ralenti, en fonction de la valeur détectée de la quantité (19) représentative de la température du moteur (T_{M}).

3. Système selon l'une quelconque des revendications 1 et 2, caractérisé en ce que le moteur (M) est un moteur à plusieurs cylindres, et le dispositif électronique (1) est préréglé afin qu'il détermine instantanément le rendement du moteur et commande le déplacement de l'au moins une soupape afin qu'il annule la transmission d'air et de carburant à au moins l'un des cylindres lorsque la puissance demandée au moteur peut être transmise uniquement par fonctionnement d'un nombre de cylindres inférieur au nombre total de cylindres du moteur et avec un rendement global qui est supérieur au rendement prédéterminé de manière instantanée.
